# EUROPÄISCHE PATENTANMELDUNG

(11) **EP 2 289 762 A2**
(43) Veröffentlichungstag der Anmeldung: **02.03.2011**
(21) Anmeldenummer: 10172818.6
(22) Anmeldetag: 13.08.2010
(51) Int. Cl.: B62B 7/14, B62B 9/28

(54) **Schiebewagen für Kinder und/oder Puppen**

(30) Priorität: 31.08.2009 DE 202009005213 U
(71) Anmelder: Beger, Udo, 84030 Ergolding (DE)
(72) Erfinder: Beger, Udo, 84034, Landshut (DE)
(74) Vertreter: Pröll, Jürgen

(57) **Zusammenfassung**

Bei Schiebewagen für Kinder und/oder Puppen mit einem Wagengestell mit mindestens seitlich angeordneten Gestellholmen (2, 3, 4) und Haltern (12, 13) für Einsätze und mit mindestens einer Vorderradanordnung (5, 6) und mindestens zwei seitlich angeordneten hinteren Rädern (7, 8), die an Stützholmen (9, 10) oder an einer Verbindungsstange (11) drehbar gelagert sind, sind Halter (12, 13) paarweise beabstandet zueinander an Gestellholmen (2, 3, 4) befestigbar. Die Halter (12, 13) weisen nach vorne und/oder nach hinten überstehende Schenkel (14, 15) auf, an denen Adapter für die Befestigung eines Einsatzes vorgesehen sind. Für die universelle Befestigung verschiedener Babyträger sind mit den Haltern (12, 13) ferner nach vorn und/oder nach hinten überstehende Brückenelemente (17) oder mindestens eine zwischengefügte Querstange (19) verbindbar. Auf der Querstange kann ein Babyträger (18) mit angepassten schlitzförmigen Führungen (20, 21) aufgesetzt werden. An den Haltern (12, 13) sind Befestigungselemente (16) für Adapter befestigbar, die an dem Einsatz korrespondierend oder als Wechseladapter für verschiedene Einsätze vorgesehen sind.

## Beschreibung

Die Erfindung betrifft einen Schiebewagen mit den im Oberbegriff des Anspruchs 1 angegebenen Merkmalen.

Ein Kinder- oder Puppenwagen der gattungsgemäßen Art ist beispielsweise aus der EP 1 795 424 A2 bekannt. Im Speziellen ist dort eine Befestigung eines Sitz-/Liegeeinsatzes angegeben, der einen obenseitigen Rahmen aufweist. An den Seitenholmen des Rahmens sind nach unten sich erstreckende, in etwa in der Schwerpunktachse des Rahmens liegend oder zur Kopfseite des Rahmens verschoben, Adapter vorgesehen, die direkt oder über Halter oder Kupplungsteile an dem Fahrgestell oder an einem, auf einen Aufstellboden aufstellbaren Fußgestell mit der Unterseite befestigbar sind. Die Adapter sind oben- oder untenseitig in verschiedene Neidungswinkel einstellbar. Ebenso kann der Rahmen in verschiedene Neigungswinkel gegenüber den Adaptern einstellbar sein. Die Adapter können an den Seitenholmen des Rahmens und/oder untenseitig an verschwenkbaren Kupplungselementen gelenkig angekoppelt sein. Mittels Arretierungselemente sind sie feststellbar. Die Adapter können aber auch an Trägerelementen fixiert sein, die an den Schrägholmen des Fahrgestells befestigt sind. Diese Trägerelemente sind als Kupplungselemente ausgebildet, in die Kupplungsstücke an den Adaptern oder diese direkt einsetzbar sind. Die Trägerelemente weisen drei hintereinander angeordnete Lagerkammern zur Aufnahme der Adapter oder Kupplungsteile auf. Dadurch ist es möglich, den Adapter gegenüber der Mittenposition zu versetzen, um eine bessere Gewichtsverteilung im Kinderwagen und eine gewünschte Schwerpunktverlagerung zu erreichen. Der Schwerpunkt kann darüber nach hinten, in Richtung der hinteren Räder verschoben werden. In solche Trägerelemente können auch Adapter oder Kupplungsstücke an Babyträgern eingesetzt werden. Babyträger sind Schalensitze für Neugeborene, die mit einem Tragebügel versehen sind und abgenommen werden können. Solche Babyträger werden anstelle oder ergänzend zu den vorhandenen Liege- und/oder Liegesitzeinsätzen zum Transport des Kleinkindes in den ersten Lebensmonaten verwendet, um das Kleinkind von einem Ort zum anderen tragend oder mit dem Kinderwagen schiebend transportieren zu können.

Ein Kinderwagen- oder Puppenwagengestell der gattungsgemäßen Art ist ferner aus der DE 20 2005 008 211 U1 bekannt. Der Kinderwagen weist zwei Kupplungseinheiten, nämlich Adapter, auf, die es ermöglichen, dass ein Sitzelement, wie z. B. ein Kinderwagensitz, ein Autokindersitz, eine Kindertragetasche oder ähnliches, abnehmbar auf ein Kinderwagengestell befestigt werden kann. Hierzu sind beidseitig Sitzstützstangen einerseits an den vorderen Schrägholmen des Kinderwagengestells angelenkt und andererseits an den hinteren Stützstreben, die an den Schrägholmen angelenkt sind, befestigt. An den Enden der Stützstreben befinden sich Lager für Hinterräder. Die Schrägholme des Kinderwagengestells sind vorderseitig über ein Brückenelement miteinander verbunden, das eine Vorderradanordnung trägt. An den parallel im Kinderwagengestell vorgesehenen Sitzstützstangen sind verschieb- und feststellbar Kupplungseinheiten angebracht, in die untenseitig an den Einsätzen vorstehende Adapter einsteckbar sind. Durch die Verschiebung kann der Schwerpunkt unter Berücksichtigung des Einsatzes jeweils verlagert werden, um die Kippsicherheit zu erhöhen und ein leichteres Fahren zu ermöglichen.

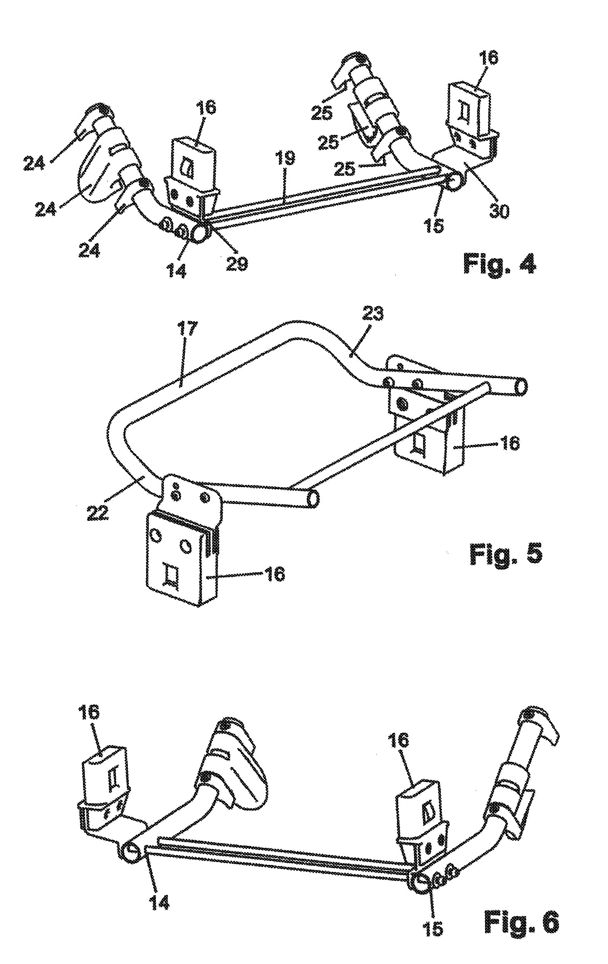

Aus der DE 20 2004 020 186 U1 ist ein zusammenlegbarer Schiebewagen mit mindestens einem mittigen Vorderrad und mindestens zwei seitlichen hinteren Rädern, unteren Längsträgern und obenseitig vorgesehenen, schräg von vorn nach hinten ansteigend verlaufenden, spiegelbildlich und beabstandet voneinander angeordneten Tragholmen mit Befestigungsmitteln für einen zwischengefügten Sitz- und/oder Liege- oder Transporteinsatz bekannt. Die Tragholme sind in Verlängerung mit Schiebestangen versehen. An den Tragholmen sind ferner schwenkbeweglich Stützstreben vorgesehen, die mit den unteren Längsträgern schwenkbeweglich verbunden sind. An den Enden der Stützträger bzw. der Längsträger sind Lager für hintere Räder seitlich vorstehend vorgesehen. Die Befestigungsmittel sind aus Kunststoff bestehende Lagertaschen, in die die Adapter an den Kinderwageneinsätzen einsetzbar sind. In der Schrift ist ferner ein Zwillingswagen mit gleichem Grundaufbau dargestellt, der aus zwei spiegelbildlich angeordneten Rahmenteilen besteht, die über einen gemeinsamen Schrägholm miteinander verbunden sind (Figur 5). Durch geeignete Scherengestelle und Querverbindungsteile ist das gesamte Gestell einklappbar. Hierzu sind auch Gelenke an den Schrägholmen vorgesehen.

Aus der DE 20 2004 012 373 U1 ist es bekannt, an einem Schrägholm an einer Stützstrebe eines Kinderwagengestells einen Rahmen zu fixieren, der zwei Stützlager für Kinderwageneinsätze aufweist. Die Rahmen sind nicht dafür ausgelegt, auch solche Babyträger aufnehmen zu können, die schlitzförmige Führungen aufweisen.

Aus der DE 20 2006 012 430 U1 ist ein Fahrgestell für einen Kinderwagen bekannt, das im Bereich des Anlenkungspunktes der hinteren Stützstreben an den Schiebestangen Aufnahmen für Lager für einen Kinderwageneinsatz aufweist, welche Lager in der Höhe verstellbar sind, um den Kinderwageneinsatz in definierte Abstände zu den Schrägholmen und den Schiebstangen verbringen zu können.

Ferner ist aus der GB 2 431 140 A ein Kinderwagengestell bekannt, bei dem die beiden aufeinanderzu schwenkbaren Vorder- und Hinterräder an einem Sitzträger befestigt sind, der über eine Verbindungsstange mit einer klappbaren Schiebestange schwenkbeweglich verbunden ist. Durch Bewegungstransformation kann das Gestell zusammengefahren werden. In einer Ausführungsvariante sind an den Stützstreben der Vorder- und Hinterräder Lagerarme mit Stützlagern zur Aufnahme zweier nacheinander einsetzbarer Sitzelemente vorgesehen.

Aus der WO 2008/040797 A1 ist ein Kinderwagen bekannt, bei dem an den Schrägholmen eines ovalen Oberteils Stützstreben für hintere Räder angeordnet sind. Über ein zwischengefügtes Kopplungsgestänge sind zwei Kinderwageneinsätze hintereinander anordenbar.

Aus der DE 73 44 153 U1 ist ein etagenförmiger Doppelsitzsportkinderwagen bekannt, bei dem an einem Rahmen zwei Sitze hintereinander angeordnet sind. Die Einfügung in das Gestell erfolgt dabei über Stützen, die an den Schrägholmen des Kinderwagengestells einerseits und an dem Rahmen andererseits befestigt sind. An dem rahmenförmigen Träger sind Stützlager für die Aufnahme von Kinderwageneinsätzen vorgesehen. Ein rahmenförmiger Einsatz zur Aufnahme von hintereinander angeordneten Kindersitzen in einem Kindersportwagen ist ferner aus der DE 202 11 272 U1 bekannt.

In der Regel weisen Zwillingswagen vorne zwei Radanordnungen zur Erhöhung der Kippsicherheit auf. Zimmer- oder Haustüröffnungen weisen eine Mindestbreite von 80 cm auf. Die Zwillingskinderwagen dürfen deshalb nur eine angepasste maximale Breite aufweisen, um ein Durchfahren einer Normtür zu ermöglichen. Hier ist nun das Problem gegeben, dass dieses mit normalen Kinderwagengestellen dann nicht realisierbar ist, wenn diese die beschriebenen Adapter aufweisen, um hierüber Babyträger, Babytragetaschen, Autokindersitze und dergleichen fixieren zu können, damit die Zwillinge in diesen Behältnissen transportiert werden können. Die Befestigung in dem Gestell führt zum seitlichen Versatz, so dass ein Überstand gegenüber den hinteren Rädern gegeben ist und in der Regel solche Zwillingskinderwagen nicht durch eine Tür geschoben werden können.

Des Weiteren sind nicht an allen Einsätzen Adapter vorgesehen, um in entsprechende Trägerelemente eingesetzt oder über Kupplungseinheiten daran befestigt werden zu können. Einige Babyträgerausführungen weisen beispielsweise in den Seitenwänden querverlaufende Schlitze vorder- und rückseitig auf, um damit auf Untergestelle aufgerastet werden zu können. Die Untergestelle weisen dazu Lagerstellen mit Querbolzen auf, auf die diese Teile aufdrückbar sind. Lösbare Verriegelungen stellen eine sichere Verbindung her. Solche Untergestelle können an dem Kinderwagen selbst nicht befestigt werden.

Ausgehend vom Stand der Technik und von der dargestellten Problematik liegt der Erfindung die Aufgabe zugrunde, die Haltevorrichtungen so auszubilden, dass sie universell für jede Art eines Einsatzes, mit oder ohne Adapter oder Schlitzführung, verwendet werden können und dass darüber hinaus eine Schrägstellungsanpassung in Längsrichtung in gewünschter und auf einfache Weise durchführbar ist. Darüber hinaus sollen beispielsweise Babyträger so gegeneinander versetzt fixiert werden können, dass auch bei einem Zwillingswagen ein Überstand nicht gegeben und ein Befahren durch Türen mit üblichen Öffnungsweiten möglich ist. Des Weiteren soll durch geeignete Ausbildung der Vorrichtung der Schwerpunkt des Wagengestells mit dem Einsatz derart verlagerbar sein, dass auch bei Zwillingswagenausführung oder relativ schmaler Ausführung eines einzelnen Schiebewagens beim Befahren einer schrägen Fläche mit z. B. 12° Neigung der Schiebewagen - auch unter Belastung - nicht umkippt.

Die Aufgabe löst die Erfindung durch Einbringung von Haltern in dem Schiebewagen und deren Ausgestaltung gemäß der im Anspruch 1 angegebenen technischen Lehre.

Vorteilhafte Weiterbildungen der Erfindung sind in den Unteransprüchen im Detail angegeben.

In einer Ausgestaltung ist vorgesehen, dass die Halter paarweise beabstandet zueinander an Gestellholmen des Wagengestells befestigt sind und gegenüber den Befestigungspunkten nach vorne oder nach hinten vorstehende Schenkel aufweisen, an denen Adapter oder Befestigungselemente für Adapter befestigbar sind und/oder mit denen vorn oder nach hinten überstehende Brückenelemente oder mindestens eine zwischengefügte Querstange verbindbar ist, auf die ein Babyträger oder ein anderer Einsatz mit angepassten schlitzförmigen Führungen seitlich fixiert und/oder seitlich verschiebbar aufsetzbar oder mit seitlichen Adaptern und/oder Kupplungselementen an den Adaptern oder Befestigungselementen derart befestigbar sind, dass sich der Schwerpunkt des Einsatzes gegenüber dem Wagenschwerpunkt und damit der Gesamtschwerpunkt des Schiebewagens verändert. Die Adapter, die an den Haltern befestigbar sind oder mit Befestigungselementen aus den Haltern verbindbar sind, können auch als Wechseladapter vorgesehen sein, so dass damit verschiedene Adapter für verschiedene Einsätze zur Anwendung kommen können.

Das Wagengestell kann beispielsweise seitliche Gestellholme aufweisen, die ein Scherengestell bilden. In diesem Fall können die Halter an den vorderen oder hinteren oberen schräg verlaufenden Gestellholmen einzeln befestigt sein. Die Schenkel an den Haltern können dabei parallel zu den äußeren seitlichen Gestellholmen horizontal verlaufend nach innen oder nach außen vorstehen. Das Gestell kann aber auch zwei obere, spiegelbildlich angeordnete, von vorne nach hinten ansteigende, durchgehende oder aus miteinander verbundenen Abschnitten gebildete Gestellholme aufweisen, an denen beispielsweise Stützholme starr oder schwenkbeweglich befestigt sind, an deren unteren Enden Lager für die Hinterräder vorgesehen sind. Im Falle einer solchen Ausbildung empfiehlt es sich, die Halter an den schrägen Gestellholmen zu befestigen, so dass die Schenkel nach vorne vorstehen. Die Halter können aber auch als Winkelhalter an den hinteren Stützstreben nach vorn oder in das Wagengestell hineinreichend oder rückseitig vorstehend angebracht sein. Der Halter bildet ein Einzelteil, das nachträglich am Schiebewagen auf einfache Weise adaptierbar ist, um beliebige Einsätze, z. B. Babyträger verschiedener Hersteller, befestigen zu können.

Der Halter kann dabei beispielsweise ein Kunststoffkörper sein, der an einen Gestellholm anschraubbar ist. In dem Halter befindet sich eine Lagerungsaufnahme, beispielsweise für ein Profilrohr, das als Schenkel vorstehend anbringbar ist. Der Halter kann aber auch aus einem Rohrprofil gebildet sein, das beispielsweise dem Rohrprofil des Gestellholms des Wagengestells entspricht. Der eine Abschnitt ist mittels Schraubverbinder oder mittels Klipphalter an dem Schrägholm oder an der in Verlängerung zum Schrägholm vorgesehenen Schiebestange befestigbar. Dies hängt jeweils von der Ausführung des Kinderwagens ab.

Der Halter kann auf einfache Weise auch dadurch realisiert werden, dass er im Wesentlichen aus einem einzigen Profilrohr besteht, z. B. einem runden Rohr, das mit einem parallel zu dem Gestellholm verlaufenden Abschnitt am Gestellholm befestigt ist, während der abgebogene Abschnitt den Schenkel bildet. Die Befestigung am Gestellholm kann über Schraubverbinder erfolgen oder auch über einen Klippverbinder. Dieser kann beispielsweise aus zwei Stützarmen und einem zwischengefügten Klippbügel bestehen, der auf den Gestellholm aufklippbar ist. Der vordere Abschnitt des Profilrohres ist abgebogen oder angesteckt und bildet den Schenkel, an dem ein Adapter, ein Befestigungselement oder ein Kupplungselement anschraubbar oder anklippbar ist. Dieser Schenkel kann aber auch dafür verwendet werden, um das nach vorne überstehende Brückenelement mit seinen beiden seitlichen Stangen aufzunehmen. Die Stangen können dabei in das Profilrohr hineingeschoben werden.

Um eine Anpassung an die Lagerpunkte eines Einsatzes vornehmen zu können, können die Stangen auch verschieblich angeordnet sein und beispielsweise mittels federnder Rasten, die in Bohrungen in den Schenkeln eingreifen, in bestimmte Tiefenstellungen arretiert werden.

Dient der Halter nach der Erfindung dazu, einen Babyträger, also einen Babysitz der Alters-Gruppe 0, aufzunehmen, der querverlaufende Schlitze in den Seitenwänden oder dem Basiskörper aufweist, um damit auf ein Bodenteil mit Querbolzen aufrasten zu können, wenn der Sitz als Autokindersitz verwendet wird, so ist ersichtlich, dass dieser Sitz auch auf eine Querstange und auf das Bügelelement aufsetzbar ist, wenn der Abstand dem Schlitzabstand entspricht. Die Querstange, die die beiden Seitenschenkel verbindet, ist an dem Ende der Schenkel angebracht, an dem sich das Bügelelement nicht befindet. Demgegenüber kann der Bügel so verschoben werden, dass die Befestigungsschlitze auf das Brückenelement und auf die Querstange aufgreifen.

Insbesondere Babyträger weisen teilweise völlig unterschiedliche Schlitztiefen auf. Versuche haben gezeigt, dass es zweckmäßig ist, das vorderseitige Brückenelement mit seitlich in Längsrichtung abgewinkelten Seitenteilen zu versehen, so dass das Brückenelement durch Drehung einmal tiefer und einmal höher liegt und so auf einfache Weise eine Höhenanpassung an die Lagerstellen des Babyträgers vorgenommen werden kann. Dadurch kann die Lage gegenüber einer starren Querstange im hinteren Bereich der Schenkel ausgeglichen werden und ein gewünschter Neigungswinkel des Babyträgers oder eines anderen Einsatzes erzielt werden.

Soweit Befestigungselement und Adapter an den Schenkeln befestigt werden, so gestattet es die Länge der Schenkel, die im Wesentlichen horizontal verlaufen, dass der Adapter oder das Befestigungselement in verschiedenen Tiefenstellungen angebracht werden kann. Auch hierdurch ist es möglich, den Schwerpunkt des Kinderwagengestells zu verschieben. Beispielsweise ist beim Zwischenfügen eines Liegeeinsatzes zwischen die beiden Querholme möglich, den Liegeeinsatz vorzuverlagern, um den Schwerpunkt zentrisch im Wagengestell zu halten.

Solche Adapter oder auch Befestigungselemente für Adapter an den Einsätzen können, wenn sie beispielsweise über Winkelbleche an die Schenkel angeschraubt werden, durch Bohrungsversatz im Neigungswinkel verstellt werden, um so auch eine Schrägstellung des Einsatzes gegenüber der Horizontalen in gewünschter Weise zu erreichen. Weiterhin hat sich als vorteilhaft erwiesen, die Schenkel gegenüber der Längsachse des Schiebewagens seitlich abzubiegen, damit die daran befestigten Adapter und Befestigungselemente in leicht gedrehter Stellung den Einsatz aufnehmen können. Hierdurch ist es beispielsweise bei Zwillingswagen möglich, den Schwerpunkt der Einsätze so zu verlagern, dass sie mit der mittigen Schwerpunktsachse nahezu zusammenfallen, wodurch die Kippsicherheit eines Wagens wesentlich erhöht wird.

Üblicherweise sind die Adapter oder Befestigungselemente an den Außenseiten der Schenkel nach oben vorstehend angebracht. Es ist aber auch möglich, einen solchen Adapter oder Befestigungselemente innenseitig oder beide innenseitig anzubringen, wenn der Einsatz schmäler ist. Es ist aber auch möglich, einen innenseitig und den paarig angeordneten zweiten Adapter oder das Befestigungselement außenseitig an dem zugeordneten Schenkel anzubringen. Über Distanzteile ist dabei jeder gewünschte Abstand zur Anpassung an die Adapterabstände am Einsatz möglich. Die Adapter, Befestigungselemente oder auch Kupplungselemente weisen zum Zwecke der Befestigung entsprechende Lagerschalen auf, die die Schenkel, z. B. Profilrohre, teilweise umschließen und hieran anschraubbar sind. Sie können aber auch mit einer Rast-Schiebeverbindung hieran befestigt sein, wobei ein federbelasteter Sperrhaken in eine Bohrung oder eine Kerbe eingreift, die in den Seitenschenkeln eingebracht ist.

Der versetzten Anordnung der Adapter oder Befestigungselemente oder auch Kupplungselemente an den Schenkeln kommt besondere Bedeutung zu, wenn die Erfindung bei einem Zwillingswagen zum Einsatz kommt, der aus zwei spiegelbildlich angeordneten Wagengestellteilen besteht, die einen gemeinsamen mittleren Gestellholm aufweisen, da durch die seitenversetzte Anordnung bei maximaler Breite des Wagengestells kein seitlicher Überstand durch die Adapter oder Befestigungselemente zu befürchten ist. An den außenseitigen Schenkeln wird der Adapter oder das Befestigungselement innenseitig angebracht, während es an dem zugeordneten zweiten Schenkel außenseitig angebracht wird, so dass der Abstand wieder so groß ist, dass z. B. der Babyträger mit seinen seitlichen Adaptern hieran befestigbar ist.

Auch das Brückenelement und die Querstange können so ausgelegt sein, dass ein seitliches Verschieben des darauf aufgesetzten Einsatzes, z. B. eines Babyträgers, möglich ist, so dass auch hierüber verhindert wird, dass Teile die Räder überstehen, so dass der Kinderwagen trotz der Zwillingsanordnung durch eine normal große Tür hindurchgeschoben werden kann. Innenseitig kann das Brückenelement auch den mittleren Gestellholm überstehen, ebenfalls die Querstange.

Beim Zwillingswagen können die Halter höhenversetzt in den beiden Wagenhälften angeordnet sein, so dass die Einsätze gegeneinander höhenverschoben im Gestell positioniert sind, wodurch der Versatz von beiden Seiten her möglich ist und keine Überstände gegeben sind. Zur Breitenanpassung können die anzumontierenden Adapter oder Befestigungselemente oder Kupplungsteile über Winkelstücke oder Distanzteile anmontiert sein, deren Länge dem Abstand entsprechend verändert wird, um den Einsatz mit seinen Adaptern so positionieren zu können, dass die Teile ineinanderfügbar sind.

In einer weiteren Ausführungsform ist vorgesehen, dass das Brückenelement mit den Seitenteilen an den Schenkeln schwenkbeweglich feststellbar oder durch Rastgelenke verstellbar angelenkt ist. Dies hat den Vorteil, dass unter Berücksichtigung der unterschiedlichen Lagerschlitze durch Schrägstellung eine Anpassung in der Höhe möglich ist, um jede gewünschte Neigungsstellung des Einsatzes zu ermöglichen. Der Halter nach der Erfindung bildet gewissermaßen ein Zwischenglied zwischen dem Wagengestell und dem eigentlichen Adapter, der als Kupplungseinheit zum Babysitz Gruppe 0 oder einem anderen Einsatz fungiert. Durch die erfindungsgemäß ausgebildete Vorrichtung besteht die Möglichkeit, unabhängig zu den Seitenholmen des Gestells, den Schwerpunkt z. B. eines Babysitzes der Gruppe 0 oder eines anderen Einsatzes längs oder quer zur Fahrtrichtung so zu verändern, dass der Wagen durch die in der Norm festgelegten 12°-Seitenneigung bei einer Belastung von 9 kg bzw. 15 kg nicht kippen kann. Diese Seitenverlagerung und auch die Tiefenverlagerung sind, wie vorher dargestellt, auf einfache Weise mit den erfindungsgemäßen Mitteln realisierbar.

Wenn der Kinder- und/oder Puppenwagen ein Zwillingswagen oder ein Einzelwagen mit außenseitigen Gestellholmen und zwei Einsätzen oder einem Einsatz ist, die seitlich oder der seitlich versetzt angeordnet werden soll, so kann vorgesehen sein, dass die Schenkel über zwei Querstangen miteinander verbunden sind, an denen fest oder verschiebbar ein zweiter Schenkel befestigt ist, der zu einem der seitlichen Schenkel einen Abstand aufweist, der breiter oder gleich groß der Breite eines Einsatzes ist. Dies hat den Vorteil, dass auch bei übereinander angeordneter Platzierung der Einsätze ein solcher seitlicher Versatz möglich ist, dass beide Kleinkinder eine freie Sicht haben und die Einsätze gegeneinander sich nicht stören. Zugleich kann aber auch die maximale Breite eingehalten werden, um das Wagengestell durch eine Türöffnung mit Norm-Maß schieben zu können.

Um eine noch größere Breitennutzung, beispielsweise bei einem Kinderwagengestellt, das für einen einzigen Einsatz ausgelegt ist, zu ermöglichen und damit auch zwei Einsätze schräg übereinander versetzt anbringen zu können, ist in weiterer Ausgestaltung der Erfindung vorgesehen, dass die Querstangen mindestens eines Halters seitlich überstehen und hieran ein weiterer Schenkel befestigt ist, der mit dem weiteren Schenkel zwischen den Haltern zusammenwirkt.

In weiterer Ausgestaltung ist für die Anbringung von versetzten Einsätzen vorgesehen, dass an den Schenkeln an den seitlichen Haltern mindestens eine Verbindungsstange befestigt ist, die mit einem Schenkel einer beabstandet unterhalb und/oder oberhalb angeordneten Haltevorrichtung verbunden ist, die Querstangen aufweist, an denen Schenkel seitlich versetzt zu den oberen angeordnet sind, um Einsätze relativ zueinander höhen- und seitenversetzt einbringen zu können. Hierdurch wird ein Adapter geschaffen, der Halterungen für zwei Adapterpaare bietet, um auf einfache Weise einen breiten Zwillingskinderwagen oder einen einsitzigen Kinderwagen so verändern zu können, dass die Einsätze, z. B. Babyträger für zwei Kleinkinder, nachträglich auf einfache Weise angebracht werden können. Hierzu können beispielsweise zwei Verbindungsstangen seitlich vorgesehen sein, die ein Kräfteparallelogramm bilden, an dem die Querstangen befestigt sind. Ein solcher Adapter kann mit Haltevorrichtungen versehen sein, die entweder an den Gestellholmen, insbesondere den schräg von unten nach oben verlaufenden Gestellholmen, befestigbar sind oder aber auch an in dem Wagengestell vorgesehenen Sitzträgern befestigbar sind, die normalerweise zur Fixierung eines Sitzeinsatzes oder eines Liegeeinsatzes dienen.

Die Erfindung wird nachfolgend anhand des in den Zeichnungen dargestellten Ausführungsbeispiels ergänzend erläutert.

In den Zeichnungen zeigen:
- FIG 1: einen Babyträger oder Babysitz der Gruppe 0, aufgesetzt auf einen Halter nach der Erfindung mit einem Brückenelement,
- FIG 2: den Halter mit Brückenelement, wie er in Figur 1 zur Anwendung kommt, mit einem seitlich sche- matisch dargestellten Befestigungselement zur Aufnahme eines Adapters oder Kupplungsteils, das an einem anderen Einsatz, z. B. einem Lie- geeinsatz oder einem anderen Babyträger, vorge- sehen ist, um darin einrasten zu können,
- FIG 3: in perspektivischer Darstellung einen Zwil- lingskinderwagen mit an den Holmen befestigten Haltern nach der Erfindung und aufgesetzten Ba- byträgern,
- FIG 4: ein weiteres Beispiel der Ausführung eines Hal- ters mit angesetzten Befestigungselementen,
- FIG 5: ein weiteres Beispiel eines Halters,
- FIG 6: eine andere Variante eines Halters,
- FIG 7: einen Halter mit seitlich abgewinkelten Schen- keln mit unterschiedlichen Längen mit daran be- festigten Befestigungselementen,
- FIG 8: Halter mit entgegengesetzt zu Fig. 7 verlaufend angebrachten Schenkeln,
- FIG 9: ein Kinderwagengestell mit einem Adapter für seitlich versetzte Babyträger als abnehmbare Einheit und
- FIG 10: einen abgenommenen Adapter für zwei Babyträger.

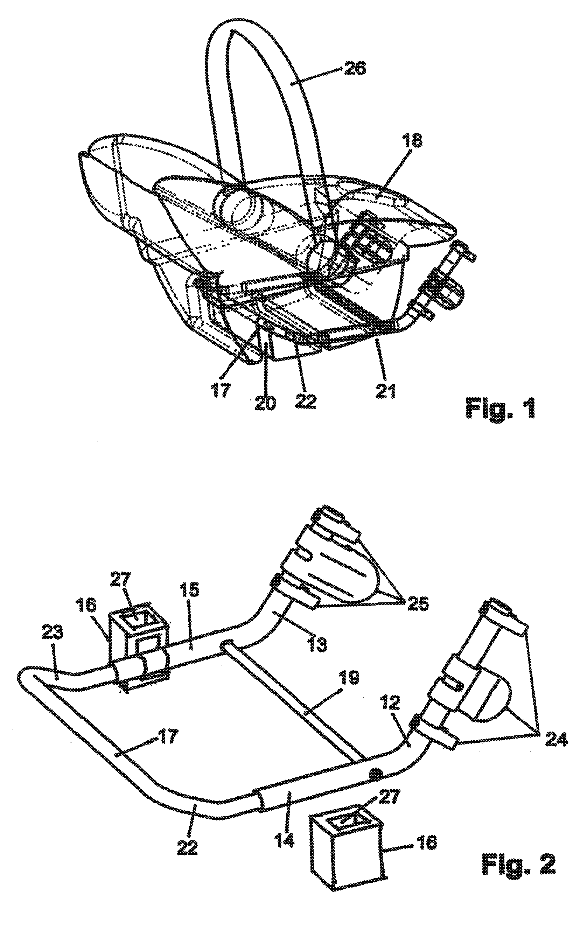

In Figur 1 ist ein Babyträger 18 bzw. ein Babysitz der Gruppe 0 dargestellt, wie er handelsüblich ist. Dieser Babyträger 18 ist als Schalensitz ausgebildet und weist einen Tragebügel 26 auf, der an den Seitenwänden des Oberteils des Babyträgers seitlich angelenkt ist. Aus der Zeichnung ist ferner ersichtlich, dass querverlaufend schlitzförmige Führungen in dem Körper des Babyträgers eingearbeitet sind. So ist eine durchgehende schlitzförmige Führung 20 vorgesehen, ferner eine mittige kleinere schlitzförmige Führung und eine Führung 21, die nur angedeutet ist. Aus der Darstellung ist ferner ersichtlich, dass der Babyträger 18 mit der Führung 20 auf ein Brückenelement 17 aufgesetzt ist, dessen Seitenteile 22 (rückseitig 23) seitlich am Babyträger 18 entlang verlaufen. Die Seitenteile 22, 23 sind in Längsrichtung abgebogen bzw. gekröpft, so dass das Brückenelement 17 gegenüber der Längsrichtung des Seitenteils 22 nach unten vorsteht. Die Seitenteile 22, 23 sind, wie auch das Brückenelement 17, aus einem Profilrohr geformt und in ein Profilrohr, das die Schenkel 14 und 15 des Halters bildet, eingeschoben. Dies ist auf Figur 2 deutlich sichtbar. Das Brückenelement 17 kann also innerhalb der Profilrohre der Schenkel 14 und 15 verschoben werden, um so den Abstand zwischen der Querstange 19, die die beiden Schenkel im hinteren Bereich verbindet, verändern zu können, um ein Einrasten in die schlitzförmigen Führungen 20 und 21 zu ermöglichen.

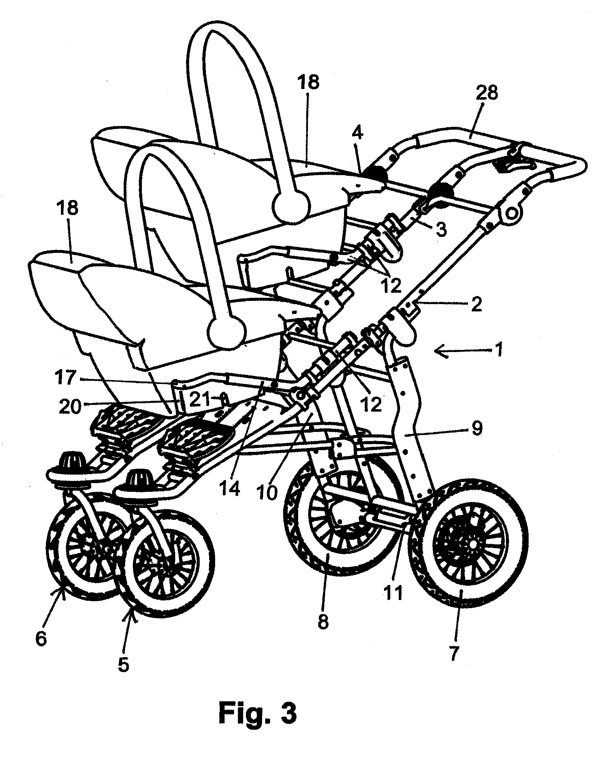

Die Schenkel 14, 15 gehen in einen abgewinkelten Halteabschnitt des Halters 12, 13 über. Diese Abschnitte sind mit Klippelementen 24 bzw. 25 bestückt. Dabei handelt es sich beispielsweise um C-förmige, am Gestellholm anliegende Gegenhalter und einen mittigen verschwenkbaren Klippbügel, der auf den Gestellholmen 2, 3, 4 aufdrückbar ist, wenn die Gegenhalter aufgesetzt sind. Neben den Schenkeln 14 und 15 sind seitlich versetzt Befestigungselemente 16 schematisch eingezeichnet, die mittels Schraubhalter oder Klipphalter an den Schenkeln 14 und 15 befestigbar sind. Diese weisen eine Aufnahme 27 auf, in die ein Adapter oder ein Kupplungsstück einsteckbar ist, das sich an den Seitenwänden des Babyträgers 18 befindet oder auch an einem anderen Einsatz. Es ist ersichtlich, dass diese Befestigungselemente 16 bei entsprechender Auslegung der Halterung sowohl außenseitig an den Schenkeln 14, 15 als auch innenseitig montierbar sind. Dies hat den Vorteil, dass bei der Verwendung eines Halters nach der Erfindung in Verbindung mit einem Zwillingswagen, der in Figur 3 in der Perspektive dargestellt ist, ein seitlicher Versatz vorgenommen werden kann, so dass die Babyträger die hinteren Räder des Zwillingswagens seitlich nicht überstehen. Der Kinderwagen kann also ungehindert durch eine Tür hindurchgeschoben werden, wenn das lichte Maß der Tür größer ist als der Außenabstand der hinteren Räder.

Figur 3 zeigt ferner, dass dieser seitliche Versatz auch dadurch erzielbar ist, dass der Babyträger 18 nach innen hin auf dem Brückenelement 17 der nicht dargestellten Querstange seitlich verschoben werden kann. Oft reichen hier 1 cm bis 2 cm aus, um zu verhindern, dass ein Überstand gegenüber den Hinterrädern gegeben ist. Die Darstellung zeigt ferner, dass ein zweiter Babyträger 18 höhenversetzt angeordnet ist. Dies ist mit den Haltern 12 und 13, die an den Gestellholmen 2, 3, 4 entsprechend positioniert angebracht werden können, einfach realisierbar, so dass auch bei einem Zwillingswagen keine gegenseitigen Störungen zwischen den Babyträgern oder anderen Einsätzen gegeben sind. Die Befestigung erfolgt über die Klipphalter 24, 25, die in Figur 2 deutlich sichtbar eingezeichnet sind. Die Schenkel 14 und 15 laufen, wie aus der Darstellung ersichtlich, nahezu horizontal. Die gewünschte Höhenanpassung erfolgt über das Brückenelement 17 mit seinen abgewinkelten Seitenteilen 22, 23. In der Darstellung in Figur 3 ist ersichtlich, dass das Brückenelement gedreht in die Schenkel 14, 15 eingeschoben ist, so dass das Brückenelement oben übersteht und so die Ausrichtung des Babyträgers bestimmt, der mit dem Führungsschlitz 20 auf dem Brückenelement 17 und mit dem Führungsschlitz 21 auf der Querstange 19 aufsitzt. Das Fahrgestell besteht aus den schräg gestellten Gestellholmen 2, 3, 4, die untenseitig jeweils paarweise miteinander verbunden sind und mit Forderradanordnungen 5 und 6 bestückt sind. Oben ist ein Schiebebügel 28 vorgesehen, um den Kinderwagen schieben zu können. Die hinteren Räder 7, 8 sind mittels Lager an den Stützholmen 9, 10 befestigt, die über eine Querverbindungsstange 11 miteinander verbunden sind.

In den Figuren 4, 5 und 6 sind weitere Beispiele von Haltern nach der Erfindung dargestellt. In Figur 4 besteht der Halter aus einem abgewinkeltem Rohr mit Klippelementen 24, 25, mit denen die Rohrabschnitte an den Gestellholmen befestigbar sind. Die vorstehenden Schenkel 14, 15 sind kürzer ausgeführt und mittels zweier Querstangen 19 miteinander verbunden. An diesen kurzen Schenkeln 14, 15 sind Befestigungselemente 16 angeschraubt, das linke Element über ein Anfügungsblech 29, das rechte Element über ein Winkelblech 30. Über die Tiefe es Winkelblechs 30 ist der Aufnahmeabstand der Aufnahmen der Befestigungselemente 16 und der Seitenversatz derselben vorgebbar.

Figur 5 zeigt ein Brückenelement 17 mit Seitenteilen 22, 23, an denen Befestigungselemente 16 angeschraubt sind. Ferner ist aus Figur 5 ersichtlich, dass an der einen Seite des Winkelbleches zwei Bohrungen in einem Radius zur dritten Bohrung angebracht sind, so dass durch Versetzen der jeweils einen Schraube eine andere Winkelstellung des Befestigungselementes 16 gegenüber dem Schenkel 14, 15 oder den abgewinkelten Seitenteilen 22, 23 einstellbar ist.

Figur 6 gibt die umgekehrte Ansicht zu Figur 4 wieder. Die Befestigungselemente 16 sind über Winkelbleche 30 an den Schenkeln 14, 15 seitlich zur Mitte des Wagens hin versetzt angeschraubt. Der Einsatz steht also auf der einen Seite nicht mehr über. Im Falle der Anwendung in einem Zwillingswagen übersteht der Einsatz den mittleren Holm, so dass der Schwerpunkt sich ebenfalls zur Mittenachse hin bewegt.

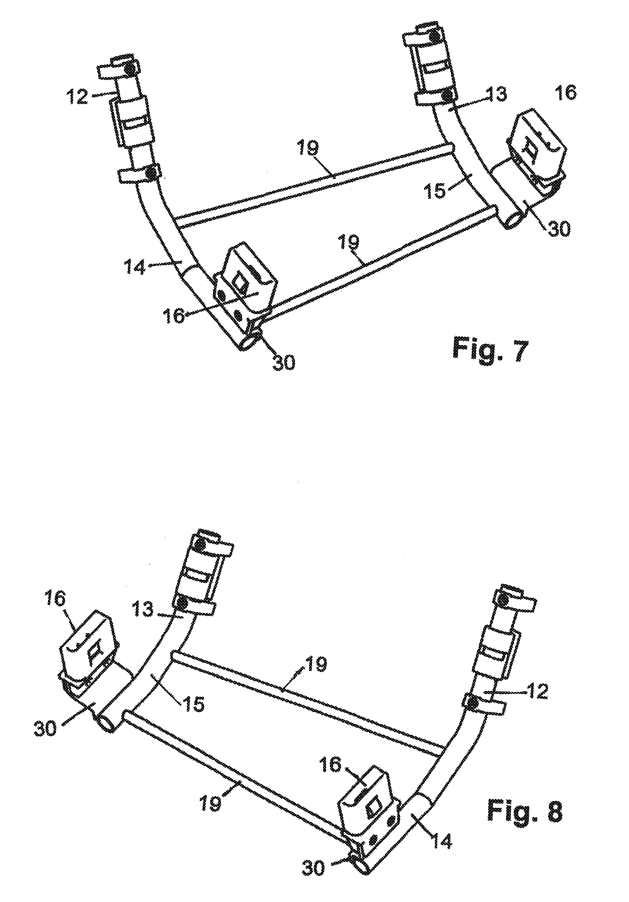

Die Figuren 7 und 8 zeigen eine Abwandlung eines anklippbaren Halters, der aus einem Rohrprofil besteht. Die beiden Halter 12, 13 mit angesetzten Klippverbindungselementen weisen Schenkel 14, 15 unterschiedlicher Länge und seitlich abgebogen auf. An diesen über Querstange 19 miteinander verbundenen Schenkeln 14, 15 sind zusätzlich seitlich über Winkelbleche 30 versetzt angeordnete Befestigungselemente 16 für die Aufnahme von Adaptern oder Kupplungselementen schräg zur Längsachse des Wagens verlaufend befestigbar. Wenn die beiden in Figuren 7 und 8 dargestellten Haltevorrichtungen in die beiden Kinderwagenhälften eines Zwillingswagens eingesetzt oder an schrägen Gestellholmen befestigt werden, so verlagert sich durch die Verdrehstellung der Schwerpunkt nochmals in Richtung der Längsachse des Wagengestells, wodurch die Kippsicherheit beim Befahren einer Neigungsfläche zusätzlich erhöht wird.

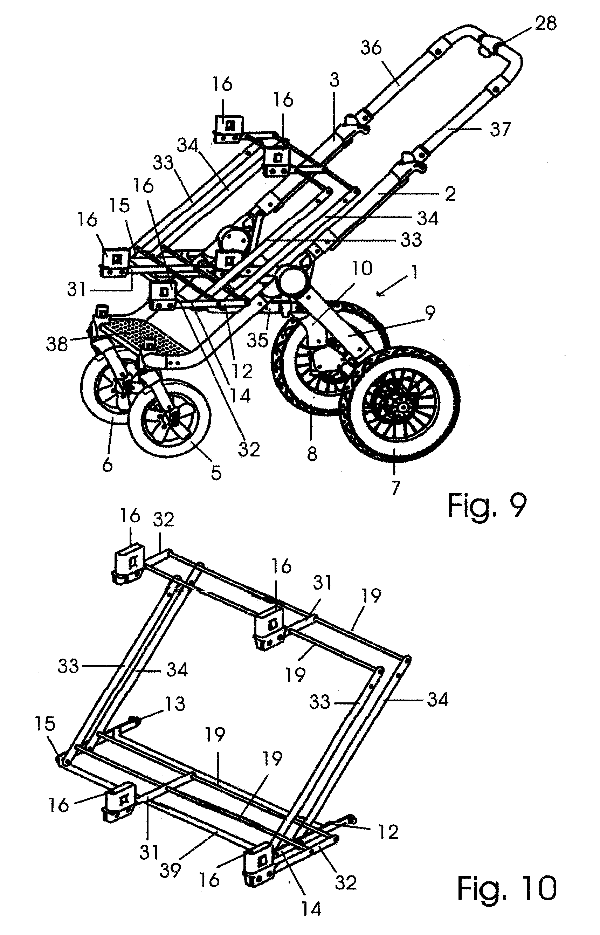

In Figur 9 ist ein Wagengestell 1 dargestellt, das von dem in Figur 3 dadurch abweicht, dass es sich hier nur um ein Wagengestell 1 für einen Einsatz handelt. Dieses Wagengestell 1 besteht aus zwei schräg von unten nach oben verlaufenden Gestellholmen 2, 3, die obenseitig durch Schiebestangen 36, 37 verlängert und über einen Schiebebügel 28 miteinander verbunden sind. Untenseitig ist ein Brückenelement 38 zur Verbindung der beiden Gestellholme 2, 3 vorgesehen. Des Weiteren sind an den Gestellholmenden Vorderradanordnungen 5, 6 angebracht. An den teilbaren Gestellholmen 2, 3 sind Stützholme 9, 10 verschwenkbar befestigt, die in der dargestellten Aufstellposition arretiert sind. An den Enden der Stützholme 9, 10 sind Lager für hintere Räder 7, 8 vorgesehen. In diesem Gestell befinden sich Sitzträger 35, die normalerweise zur Aufnahme eines Sitzeinsatzes oder eines Liegeeinsatzes dienen. In einer weiteren Ausgestaltung der Erfindung ist nun vorgesehen, dass hieran die Schenkel 14, 15 eines Adapters befestigbar sind, welche Schenkel 14, 15 über zwei Querstangen 19 miteinander verbunden sind, auf denen verschiebbar oder fest weitere Schenkel 31, 32 angeordnet sind, an deren vorstehenden Enden Befestigungselemente 16 mit Einstecköffnungen fixiert sind, in die nicht dargestellte Kupplungselemente oder Adapter an einem Babyträger eingesetzt werden können. Damit zwei solche Babyträger übereinander angeordnet sein können, sind ferner, wie auch Figur 10 zeigt, an den Schenkeln 14, 15 paarweise jeweils zwei Verbindungsstangen 33, 34 in Form eines Kräfteparallelogramms angebracht, die sowohl oben- als auch untenseitig über einseitig überstehende Querstangen 19 miteinander verbunden sind.

Wie insbesondere aus Figur 10 ersichtlich, sind an den oberen Querstangen 19 wiederum zwei weitere Schenkel 31, 32 angebracht, an deren vorstehenden Enden Befestigungselemente 16 zur Aufnahme des zweiten Babyträgers vorgesehen sind. Die Schenkel 14, 15 sind durch weitere Querstangen 39, 40 zur Erhöhung der Stabilität verbunden. Ferner weisen sie Halter 12 und 13 auf, mit denen sie an den Sitzträgern 35 befestigbar sind, wie aus Figur 9 ersichtlich ist. Die hinteren Verbindungsstangen 34 können dabei an den Gestellholmen 2, 3 beispielsweise über Klettbandhalter oder aber auch über starre Halter mit Schenkeln verbunden sein. **Bezugszeichenliste**
- 1: Wagengestell
- 2: Gestellholm
- 3: Gestellholm
- 4: Gestellholm
- 5: Vorderradanordnung
- 6: Vorderradanordnung
- 7: Hinterrad
- 8: Hinterrad
- 9: Stützholm
- 10: Stützholm
- 11: Verbindungsstange
- 12: Halter
- 13: Halter
- 14: Schenkel
- 15: Schenkel
- 16: Befestigungselement
- 17: Brückenelement
- 18: Babyträger
- 19: Querstange
- 20: Führung
- 21: Führung
- 22: Seitenteil
- 23: Seitenteil
- 24: Klippelement
- 25: Klippelement
- 26: Tragebügel
- 27: Aufnahme
- 28: Schiebebügel
- 29: Anfügungsblech
- 30: Winkelblech
- 31: Schenkel
- 32: Schenkel
- 33: Verbindungsstange
- 34: Verbindungsstange
- 35: Sitzträger
- 36: Schiebestangen
- 37: Schiebestangen
- 38: Brückenelement
- 39: Querstange
- 40: Querstange

## Patentansprüche

1. Schiebewagen für Kinder und/oder Puppen mit einem Wagengestell mit mindestens seitlich angeordneten Gestellholmen (2, 3, 4) und Haltern (12, 13) für Einsätze und mit mindestens einer Vorderradanordnung (5, 6) und mindestens zwei seitlich angeordneten hinteren Rädern (7, 8), die an Stützholmen (9, 10) oder an einer Verbindungsstange (11) drehbar gelagert sind, wobei die Halter (12, 13) paarweise beabstandet zueinander an Gestellholmen (2, 3, 4) des Wagengestells befestigbar sind und gegenüber den Gestellholmen (2, 3, 4) nach vorne vorstehende und/oder nach hinten überstehende Schenkel (14, 15) aufweisen, an denen Adapter für die Befestigung eines Einsatzes vorgesehen sind, **dadurch gekennzeichnet, dass** mit den Haltern (12, 13) ferner nach vorn und/oder nach hinten überstehende Brückenelemente (17) oder mindestens eine zwischengefügte Querstange (19) verbindbar sind bzw. ist, auf die ein Babyträger (18) oder ein anderer Einsatz mit angepassten schlitzförmigen Führungen (20, 21) seitlich fixierbar oder seitlich verschieblich aufsetzbar ist, oder dass an den Haltern (12, 13) Befestigungselemente (16) für Adapter befestigbar sind, die an dem Einsatz korrespondierend oder als Wechseladapter für verschiedene Einsätze vorgesehen sind.

2. Schiebewagen nach Anspruch 1, **dadurch gekennzeichnet, dass** das Brückenelement (17) seitlich in Längsrichtung abgewinkelte Seitenteile (22, 23) aufweist, dass das Brückenelement (17) durch Drehung und Befestigung an den Halter (12, 13) einmal nach oben und einmal nach unten gegenüber den Schenkeln (14, 15) verlaufend angeordnet ist und dass im hinteren Bereich der Schenkel (14, 15) eine Querstange (19) vorgesehen ist.

3. Schiebewagen nach Anspruch 1 oder 2, **dadurch gekennzeichnet, dass** der Halter (12, 13) ein Profilrohr mit einem ersten Abschnitt aufweist, der mittels Klippelemente (24, 25) und/oder Schraub-Halteelemente an den Gestellholm (3, 4) anklippbar und/oder anschraubbar ist, und dass der Schenkel (14, 15) ein Profilrohr oder ein in Längsrichtung oder in Längsrichtung und in seitlicher Richtung abgebogene Verlängerung des Profilrohres des Halters (12, 13) ist, in welchen ein Abschnitt des Brückenelementes (17) einsteckbar ist oder an welchen Schenkeln (14, 15) die Adapter oder Befestigungselemente (16) für Adapter befestigbar sind.

4. Schiebewagen nach Anspruch 1 oder 3, **dadurch gekennzeichnet, dass** an den Schenkeln (14, 15) Adapter oder Befestigungselemente (16) in verschiedenen Positionen und/oder verschiedenen Schrägstellungen gegenüber der Horizontalen anbringbar sind.

5. Schiebewagen nach Anspruch 1, **dadurch gekennzeichnet, dass** von den zu einem Haltepaar (12, 13) gehörenden Adaptern oder Befestigungselementen (16) eines an der Außenseite und eines an der Innenseite der benachbarten Schenkel (14, 15) befestigt ist und dass der Abstand stets der Breite bzw. dem Abstand der Adapter an den Einsätzen angepasst ist.

6. Schiebewagen nach einem der vorhergehenden Ansprüche, **dadurch gekennzeichnet, dass** der Schiebewagen zwei obere, spiegelbildlich angeordnete, von vorn nach hinten ansteigende, durchgehende oder aus miteinander verbundene Abschnitten gebildete Gestellholme (2, 3 4) aufweist und dass die Schenkel (14, 15) aus der Ebene der Gestellholme (2, 3, 4) vorstehen.

7. Schiebewagen nach Anspruch 1, 5 oder 6, **dadurch gekennzeichnet, dass** der Kinder- und/oder Puppenwagen ein Zwillingswagen ist, der aus zwei spiegelbildlich angeordneten Wagengestellteilen besteht, die einen gemeinsamen mittleren Gestellholm aufweisen und dass die Halter (12, 13) an den Holmenpaaren (2, 3 oder 3, 4) gegeneinander höhenversetzt und/oder relativ zueinander seitlich verschoben und/oder in definierten Winkeln seitlich versetzt angeordnet sind.

8. Schiebewagen nach Anspruch 1, **dadurch gekennzeichnet, dass** der Schiebewagen ein Einzelschiebewagen ist und dass die Halter (12, 13) an den beiden Gestellholmen (2, 3) befestigt sind und dass die Adapter oder Befestigungselemente (16) außenseitig und/oder innenseitig an den Schenkeln (14, 15) befestigt sind.

9. Schiebewagen nach Anspruch 1, **dadurch gekennzeichnet, dass** die Schenkel (14, 15) im Wesentlichen horizontal verlaufen.

10. Schiebewagen nach Anspruch 1, **dadurch gekennzeichnet, dass** das Brückenelement (17) mit den Seitenteilen (22, 23) an den Schenkeln (14, 15) schwenkbeweglich feststellbar oder durch Rastgelenke verstellbar angelenkt ist.

11. Schiebewagen nach Anspruch 1, **dadurch gekennzeichnet, dass** die Seitenteile (22, 23) gegenüber den Schenkeln (14, 15) tiefenverstellbar sind.

12. Schiebewagen nach Anspruch 1, **dadurch gekennzeichnet, dass** der Kinder- und/oder Puppenwagen ein Zwillingswagen oder ein Einzelwagen mit außenseitigen Gestellholmen (2, 4) und zwei Einsätzen oder einem Einsatz ist, dass die Schenkel (14, 15) über zwei Querstangen (19) direkt oder über Zwischenglieder miteinander verbunden sind, an denen fest oder verschiebbar ein zweiter Schenkel (31) befestigt ist, der zu einem der seitlichen Schenkel (14, 15) einen Abstand aufweist, der breiter oder gleich groß der Breite eines Einsatzes ist.

13. Schiebewagen nach Anspruch 12, **dadurch gekennzeichnet, dass** die Querstangen (19) mindestens einen der Halter seitlich überstehen und hieran ein weiterer Schenkel (32) befestigt ist, der mit dem weiteren Schenkel (31) zwischen den Haltern zusammenwirkt.

14. Schiebewagen nach Anspruch 12, **dadurch gekennzeichnet, dass** an den Schenkeln (14, 15) der seitlichen Haltern (12, 13) mindestens jeweils eine Verbindungsstange (33, 34) befestigt ist, die mit je einem Schenkel (31, 32) einer beabstandet unterhalb und/oder oberhalb angeordneten Haltevorrichtung verbunden ist, die ihrerseits über Querstangen (19) miteinander verbunden sind, wobei die unteren Schenkel (31, 32) seitlich versetzt zu den oberen (31, 32) angeordnet sind, um Einsätze relativ zueinander höhen- und seitenversetzt einbringen zu können.

15. Schiebewagen nach Anspruch 14, **dadurch gekennzeichnet, dass** zwei Verbindungsstangen (33, 34) seitlich vorgesehen sind, die ein Kräfteparallelogramm bilden und dass die Querstangen (19) an diesen befestigt sind.
